Europäisches Patentamt

European Patent Office

Office européen des brevets

(11) Publication number: **0 108 440**
**B1**

(12) ## EUROPEAN PATENT SPECIFICATION

(45) Date of publication of patent specification: **06.08.86**

(51) Int. Cl.⁴: **G 03 B 27/80**

(21) Application number: **83201484.9**

(22) Date of filing: **18.10.83**

(54) **A measuring device for measuring the optical density of both the background and the image areas of an original.**

(30) Priority: **03.11.82 NL 8204260**

(43) Date of publication of application:
**16.05.84 Bulletin 84/20**

(45) Publication of the grant of the patent:
**06.08.86 Bulletin 86/32**

(84) Designated Contracting States:
**DE FR GB NL**

(56) References cited:
**FR-A-2 173 537**
**US-A-3 202 042**
**US-A-4 302 780**

(73) Proprietor: **Océ-Nederland B.V.**
**St. Urbanusweg 43**
**NL-5914 CC Venlo (NL)**

(72) Inventor: **Ritzerfeld, Willem Gerrit Jozef**
**Arienswei 16**
**Venlo (NL)**
Inventor: **Eertink, Bastiaan Bernard Boele**
**Land van Kessel 7**
**Grubbenvorst (NL)**

(74) Representative: **Bleukx, Lucas Lodewijk Maria,**
**Ir.**
**Océ-Nederland B.V. Patents & Information Dept.**
**Postbus 101**
**NL-5900 MA Venlo (NL)**

Courier Press, Leamington Spa, England.

## Description

This invention relates to a measuring device for measuring the optical density of both the background and the image areas of an original, comprising:

— a photoelectric detector for detecting the optical densities on a strip of the original and generating an electrical measuring signal having a potential pattern which is an index of the measured optical densities,
— a peak detector which selects from the measuring signal an extreme potential which is an index of the optical density of the background of the original,
— a first detection circuit which detects from the measuring signal those signal portions whose potential deviates more from the extreme potential than a first reference potential deviates from the extreme potential, and which generates a first output signal which is an index of the number of signal portions detected,
— a second detection circuit which detects from the measuring signal those signal portions whose potential deviates more from the extreme potential than a second reference potential deviates from the extreme potential, and which generates a second output signal which is an index of the number of signal portions detected, and .
— a comparison circuit for comparing the output signals of the first and second detection circuits.

A device of this kind is known from United States Patent 3 202 042. According to that patent an annular strip of an original is scanned by a detector which generates a measuring signal in the form of a wave containing various peaks depending upon the optical densities detected in the strip by the detector. A peak detector selects from the measuring signal the highest potential which is an index of the optical density of the background of the original. A detection circuit comprising a level detector and a counter is used to determine the number of signal portions situated above a low reference potential, which is manually adjustable but fixed during the measurement. A second detection circuit is used in the same way to determine the number of signal portions above a high reference potential, which is fixed during the measurement. The relationship between the two numbers is determined in a comparison circuit and shown by means of an indicator. By varying the intensity of the light source for illuminating the original it is possible to bring the optical density of as many as possible signal portions above one and the same reference signal and it is also possible to determine whether the optical density of the background is still within specific limits. If there is a sufficiently large difference between the optical density of the image areas and that of the background, the original is copied with the intensity to which the light source has been set for the measurement. The measuring device is intended for measuring originals which have to be copied on contrasty light-sensitive material, such as lithographic film, upon which it is desired to reproduce all the image information having an optical density within specific limits on a background whose optical density differs considerably from that of the image information.

The known measuring device is unsuitable for use in copying machines having automatic exposure control by means of which it is desired to produce copies on which weak information of the original is also shown on the copy. The term "weak information" used here denotes information whose optical density differs only little from that of the background. Generally, such information is completely or partially lost in copying if the copying conditions are so selected as to produce a white background on the copy. When the original does contain weak information it is therefore frequently practice to use different process conditions, e.g. different exposure or, in electrophotographic processes, a different developing voltage on the developing electrode. The result is a copy having a shaded background upon which weak information is reproduced still weak but without any information loss.

The known device also requires the use of the same light source for exposing the original during measuring and copying. This is a drawback for use in modern copying machines in which the light-sensitive material is generally illuminated by flashlights.

The object of this invention is so to improve the known device that the above disadvantages are obviated.

To this end, according to the invention, a measuring device as referred to in the preamble is provided with means which adjust the magnitude of the first and second reference potentials in dependence on the extreme potential selected by the peak detector.

Preferably, means which adjust these reference potentials proportionally to the extreme potential are used for this purpose.

The invention is explained in detail with reference to the accompanying drawing wherein:

Fig. 1 is a schematic circuit of a measuring device according to the invention.

Figs. 2—5 are graphs of signal shapes generated at various places in the circuit according to Fig. 1.

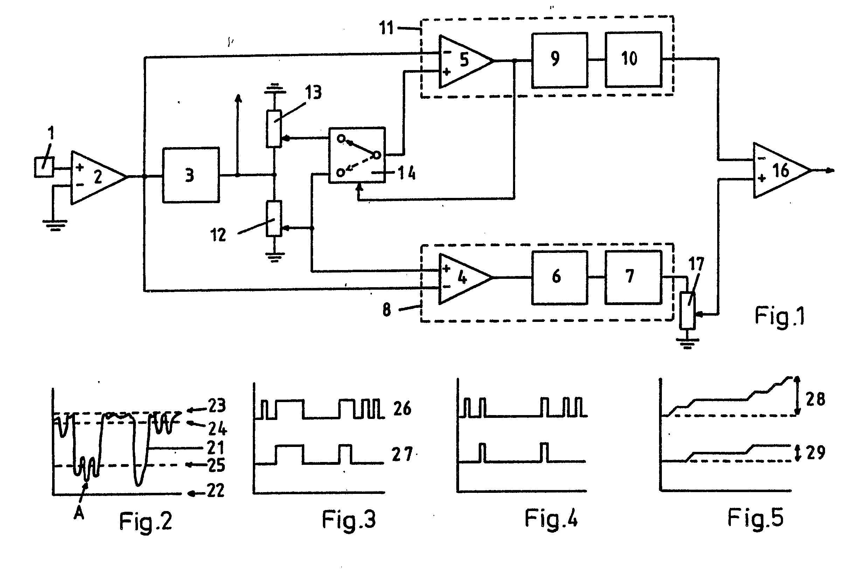

The circuit according to Fig. 1 comprises a detector 1 which can be mounted at a suitable place in a copying machine to measure the optical densities occurring on a strip of the original passing the detector. The detector is connected to the input of an analog amplifier 2. The output of the analog amplifier is connected to a peak detector 3, to the inverting input of a level detector 4, and to the inverting input of a level detector 5.

A monostable multivibrator 6 and an integrator 7 are connected successively after the level detector 4 and form a first detection circuit 8 together with the level detector 4. A monostable multivibrator 9 and an integrator 10 are also successively connected after the level detector 5 and form a second detection circuit 11 together with the level detector 5. The output of the peak detector 3 is connected to two adjustable voltage dividers 12 and 13. The adjustable tapping of the voltage divider 12 is connected to the non-inverting input of the level detector 4. The non-inverting input of level detector 5 is connected to a contact of a switch element 14 connected by two other contacts to the adjustable tappings of the voltage dividers 12 and 13. Thus depending on the position of the switch element 14 the level detector 5 is connected either to the voltage divider 12 or to the voltage divider 13. The control input for switching the switch element 14 is connected to the output of the level detector 5. The output of integrator 10 is directly connected to the inverting input of a comparator 16 and the output of the integrator 7 is connected via an adjustable voltage divider 17 to the non-inverting input of the comparator 16.

During the scanning of a positive original, the detector 1 generates a measuring signal which is converted by amplifier 2 into an amplified signal having a shape like the curve 21 represented in Fig. 2 with respect to the earth potential 22. The deep dips in the curve represent image information of high optical density (strong information) and the shallow dips represent image information of low optical density (weak information) in the original. The peak detector 3 selects from the measuring signal an extreme potential 23 which is an index of the optical density of the background of the original. A first reference potential 24 proportional to the extreme potential 23 is applied via the voltage divider 12 to the non-inverting input of the level detector 4. A second reference potential 25 proportional to the extreme potential 23 is applied in the same way to the non-inverting input of the level detector 5. The amplified measuring signal represented by curve 21 is fed to the inverting inputs of the two level detectors. These detectors generate a high signal at their output at the times that the amplified measuring signal is lower than the associated reference potential and a low signal when the amplified measuring signal is higher than the associated reference potential. The level detectors thus detect those portions of the measuring signal which are further away from the extreme potential than the associated reference potential is from the extreme potential. Since the reference potentials remain dependent on the extreme potential 23, the first reference potential 24 can in fact be set to a value close to the extreme potential and it is possible to detect weak information irrespective of the optical density of the background of the original.

The signal generated at the output of the level detector 4 has a block shape 26 and the signal generated at the output of the level detector 5 has a block shape 27 as represented in Fig. 3. The block shaped signal 26 is representative of all the image information detected by the detector and the block shape 27 is representative of the strong image information detected by the detector.

Small variations around the second reference potential 25 as shown at A in Fig. 2 are not shown separately at the output of the level detector 5, because when a high signal is generated at the output of level detector 5 the switching element 14 switches over so that the first reference potential 24 is connected to the level detector 5. Switching element 14 cannot return to its initial state until the amplified measuring signal becomes higher than the first reference potential 24. The switching element 14 thus offers the advantage that, in an image information having a high optical density, minor variations yielding a measuring signal with a plurality of peaks are not now processed by the measuring device as separate items of information but as a single item of information.

By means of the mono-stable multivibrator 6, or 9 respectively, each rising flank of signals 26, or 27 respectively, is converted into a pulse of fixed width and amplitude as indicated in Fig. 4. These pulses are integrated by integrator 7, or 10 respectively, to give a d.c. signal whose potential with respect to earth (28, or 29 respectively, in Fig. 5) is proportional to the number of pulses generated at the output of the monostable multivibrators 6, or 9 respectively, during the measuring time. The two d.c. signals are fed to the comparator 16. When the adjustable voltage divider 17 is set to the maximum value, the comparator indicates whether the number of strong information items in the original is equal to or less than the total number of image information items. The circuit then already signals one single weak information item. By changing the setting of voltage divider 17 the circuit can be made to react to a different ratio between the number of strong and the total number of information items and hence to a different percentage of weak information.

The signal generated at the output of peak detector 3 can be used to control an automatic exposure regulation system in a copying machine so that it preferably yields copies with a white background when the copy paper is white. If the signal at the output of comparator 16 indicates that more than a specific percentage of weak information is occurring in the scanned part of the original, that signal can be used to provide a fixed correction to the automatic exposure regulation system or, in the case of an electrophotographic copying machine, the counter-voltage on the developing device, or the exposure together with the said counter-voltage, can in many cases be altered to give copies with a shaded background on which the weak information items also remain visible.

Of course the invention as claimed is not limited to the embodiment described. Various alternative embodiments according to the invention are possible. For example, the detector may be a photoelectric cell which is moved over a stationary original and thus scans a strip of the original or the entire original. In other embodiments the detector may consist of an array of photocells which detects a strip of the original at one moment and transmits the detected information per photocell successively to the circuit coupled thereto. In alternative embodiments it is also possible to use a different circuit arrangement, e.g. by removing the switching element 14 in the embodiment according to Fig. 1 and connecting a JK flip-flop between the level detector 5 and the monostable multivibrator 9. This JK flip-flop can be blocked to rising or falling signal jumps by means of the signal at the output of the level detector 4, which is then connected to the J or K input of the flip-flop.

In embodiments using a microcomputer, the microcomputer can be used as switching device because the microcomputer can ensure that the detector circuit 11 cannot detect more than one information item as long as the output of the level detector 4 is high.

The integrators in the embodiment according to Fig. 1 can also be replaced by counters and the counted signal portions can be compared in a comparator circuit adapted thereto. Of course embodiments are also possible for measurements on negative originals. Inter alia, this may be an embodiment according to Fig. 1 in which the peak detector 3 is adapted to measure minima instead of maxima, the voltage dividers 12 and 13 are replaced by summing devices and the inputs of the level detectors are changed over.

For measurements on transparent, negative originals, it may be advantageous to adapt only the peak detector and the inputs of the level detectors and thus not to replace the voltage dividers by summing devices but to connect these voltage dividers, instead of to earth potential, to a base potential derived from a blank measurement by the detector. This blank measurement can be carried out on the light source itself, i.e. without a negative between the detector and the light source, by carrying out a blank measurement in each case and retaining it during the measurement on the original.

Adaption of the base potential enables the circuit to be automatically corrected within specific limits for variations in detector sensitivity and variations in the light intensity due to the ageing of the light source used in the measurements.

Of course the invention is not limited to embodiments in which two detector circuits are used. More detector circuits may be used. In addition to weak and strong information, a measuring device of this kind can also be used to measure information of moderate strength and to produce a copy having an unshaded, slightly shaded or more intensely shaded background depending upon the quantities of the various kinds of information occurring in the original.

## Claims

1. A measuring device for measuring the optical density of both the background and the image areas of an original, comprising:

— a photoelectric detector (1) for detecting the optical densities on a strip of the original and generating an electrical measuring signal (21) having a potential pattern which is an index of the measured optical densities,

— a peak detector (3) which selects from the measuring signal (21) an extreme potential (23) which is an index of the optical density of the background of the original,

— a first detection circuit (8) which detects from the measuring signal (21) those signal portions whose potential deviates more from the extreme potential (23) than a first reference potential (24) deviates from the extreme potential (23), and which generates a first output signal (28) which is an index of the number of signal portions detected,

— a second detection circuit (11) which detects from the measuring signal (21) those signal portions whose potential deviates more from the extreme potential (23) than a second reference potential (25) deviates from the extreme potential (23), and which generates a second output signal (29) which is an index of the number of signal portions detected, and

— a comparison circuit (16, 17) for comparing the output signals of the first (8) and second (11) detection circuits,

characterised in that means (12, 13) are provided which adjust the magnitude of the first (24) and second (25) reference potentials in dependence on the extreme potential (23) selected by the peak detector (3).

2. A measuring device according to claim 1, characterised in that the means (12, 13) for adjusting the first (24) and the second (25) reference potentials adjust these reference potentials proportionally to the extreme potential (23).

3. A measuring device according to claim 1, characterised in that the means (12, 13) for adjusting the first (24) and second (25) reference potentials adjust each of these reference potentials to a specific constant potential difference from the extreme potential (23).

4. A measuring device according to any of the preceding claims, in which the second reference potential (25) deviates more from the extreme potential (23) than the first reference potential (24) deviates from the extreme potential (23), characterised in that the second detection circuit (11) is provided with a switching device (14) which prevents the output signal of the second detection circuit (11) changing more than once after a change of the output signal of the first detection circuit (8).

## Patentansprüche

1. Messvorrichtung zum Messen der optischen Dichte eines Hintergrundes sowie der Bildfläche eines Originals, mit:

— einem fotoelektrischen Detektor (1) zur Feststellung der optischen Dichten entlang einem Streifen des Originals und zur Erzeugung eines elektrischen Messsignals (21) met einem Potentialverlauf, der ein Index der gemessenen optischen Dichten ist,
— einem Scheitelwert-Detektor (3), der ein extremes Potential (23) des Messsignals (21) auswählt, welches ein Index der optischen Dichte des Hintergrunds des Originals ist,
— einer erste Detektorschaltung (8), welche diejenige Signalteile des Messsignals (21) feststellt, deren Potential mehr von dem extremen Potential (23) abweicht als ein ersten Bezugspotential (24) von dem extremen Potential (23) abweicht, und welche ein erstes Ausgangssignal (28) erzeugt, das ein Index der Anzahl der festgestellten Signalteile ist,
— einer zweiten Detektorschaltung (11), welche diejenigen Signalteile des Messsignals (21) feststellt, deren Potential mehr von dem extremen Potential (23) abweicht als ein zweites Bezugspotential (25) von dem extremen Potential (23) abweicht, und welche ein zweites Ausgangssignal (29) erzeugt, das ein Index der Anzahl der nachgewiesenen Signalteile ist, sowie mit
— einer Vergleichsschaltung (16, 17) zum Vergleich der Ausgangssignale der ersten (8) und zweiten (11) Detektorschaltungen,

dadurch gekennzeichnet, dass eine Einrichtung (12, 13) zur Einstellung der Grösse des ersten (24) und zweiten (25) Bezugspotentials in Abhängigkeit von dem extremen Potential (23) vorgesehen ist, das durch den Scheitelwert-Detektor (3) ausgewählt wird.

2. Messvorrichtung nach Anspruch 1, dadurch gekennzeichnet, dass die Einrichtung (12, 13) zur Einstellung des ersten (24) und des zweiten (25) Bezugspotentials diese Bezugspotentiale proportional zu dem extremen Potential (23) einstellt.

3. Messvorrichtung nach Anspruch 1, dadurch gekennzeichnet, dass die Einrichtung (12, 13) zur Einstellung des ersten (24) und zweiten (25) Bezugspotentials jedes dieser Bezugspotentiale auf eine spezielle konstante Potentialdifferenz von dem extremen Potential (23) einstellt.

4. Messvorrichtung nach einem der vorhergehenden Ansprüche, wobei das zweite Bezugspotential (25) mehr von dem extremen Potential (23) abweicht als das erste Bezugspotential (24) von dem extremen Potential (23) abweicht, dadurch gekennzeichnet, dass die zweite Detektorschaltung (11) eine Schalteinrichtung (14) enthält, die verhindert, dass das Ausgangssignal der zweiten Detektorschaltung (11) sich mehr als einmal nach einer Änderung des Ausgangssignals der ersten Detektorschaltung (8) ändert.

## Revendications

1. Dispositif pour mesurer la densité optique des surfaces d'arrière-plan et d'image d'un original, comprenant:

— un détecteur photoélectrique (1) pour détecter les densités optiques d'une bande de l'original et engendrer un signal électrique de mesure (21) ayant un motif de potentiel qui est un indice des densités optiques mesurées,
— un détecteur de crêtes (3) qui sélectionne à partir du signal de mesure (21) un potentiel extrême (23) qui est un indice de la densité optique de l'arrière-plan de l'original,
— un premier circuit de détection (8) qui détecte à partir du signal de mesure (21) celles des parties du signal dont le potentiel diffère plus du potentiel extrême (23) qu'un premier potentiel de référence (24) ne diffère du potentiel extrême (23), et qui engendre un premier signal de sortie (28) qui est un indice du nombre de parties détectées dans te signal,
— un second circuit de détection (11) qui détecte à partir du signal de measure (21) celles des parties du signal dont le potentiel diffère plus du potentiel extrême (23) qu'un second potentiel de référence (25) ne diffère du potentiel extrême (23), et qui engendre un second signal de sortie (29) qui est un indice du nombre de parties détectées dans le signal, et
— un circuit de comparaison (16, 17) pour comparer les signaux de sortie du premier (8) et du second (11) circuits de détection, caractérisé en ce que des moyens (12, 13) sont prévus qui règlent l'amplitude du premier (24) et du second (25) potentiels de référence en fonction du potentiel extrême (23) sélectionné par le détecteur de crêtes (3).

2. Dispositif de mesure suivant la revendication 1, caractérisé en ce que les moyens (12, 13) pour régler le premier (24) et le second (25) potentiels de référence règlent ces potentiels de référence proportionnellement au potentiel extrême (23).

3. Dispositif de mesure suivant la revendication 1, caractérisé en ce que les moyens (12, 13) pour régler le premier (24) et le second (25) potentiels de référence règlent chacun de ces potentiels de référence à une différence de potentiel spécifique constante par rapport au potentiel extrême (23).

4. Dispositif de mesure suivant l'une quelconque des revendications précédentes, dant lequel le second potentiel de référence (25) diffère plus du potentiel extrême (23) que le premier potentiel de référence (24) diffère du potentiel extrême (23), caractérisé en ce que le second circuit de détection (11) comporte un commutateur (14) qui empêche le signal de sortie du second circuit de détection (11) de varier plus d'une fois après un changement du signal de sortie du premier circuit de détection (8).

Fig.1

Fig.2

Fig.3

Fig.4

Fig.5

1